# EUROPEAN PATENT APPLICATION

(11) **EP 4 791 096 A1**
(43) Date of publication of application: **12.08.2026**
(21) Application number: 26153636.1
(22) Date of filing: 22.01.2026
(51) Int. Cl.: H04W 68/02, H04L 5/00, H04W 52/02, H04W 56/00, H04W 76/28

(54) **INTER-FREQUENCY LOW POWER-WAKE UP SIGNAL (LP-WUS) MONITORING CONDITION**

(30) Priority: 06.02.2025 US 202519047321
(71) Applicant: Nokia Technologies Oy, 02610 Espoo (FI)
(72) Inventor: KOSKINEN, Jussi-Pekka, 90420 Oulu (FI); KAINULAINEN, Jani-Pekka, Cottenham, CB24 8BA (GB); KAIKKONEN, Jorma Johannes, 90800 Oulu (FI); DALSGAARD, Lars, 90230 Oulu (FI)
(74) Representative: Script Intellectual Property LLP

(57) **Abstract**

An apparatus includes: at least one processor, and at least one memory having stored thereon instructions. The instructions, when executed by the at least one processor, cause the apparatus to perform at least: configuring to monitor for a low-power wake up signal (LP-WUS) and for paging on a first carrier and to respond to paging, received on the first carrier, on at least one second carrier; determining at least one threshold, where the at least one threshold is derived based on at least one condition, relating to channel quality of at least one of the first carrier or the at least one second carrier, for monitoring for the LP-WUS on the first carrier; and in response to receiving a LP-WUS or a paging on the first carrier, evaluating whether at least one channel measurement, of the at least one second carrier, satisfies the at least one determined threshold.

## Description

### FIELD

Various example embodiments relate to low-power wake up signals (LP-WUS) and paging and, more particularly, to configurations for receiving LP-WUS and paging on a first carrier and for responding to the paging on a second carrier.

### BACKGROUND

Wireless networking provides significant advantages for user mobility. A user's ability to remain connected while on the move provides advantages not only for the user, but also provides greater efficiency and productivity for society as a whole. As expectations for connection reliability, data speed, and lower power consumption, become more demanding, technology for wireless networking must also keep pace with such expectations. Accordingly, there is continuing interest in improving wireless networking technology.

### SUMMARY

In aspects, an apparatus includes: at least one processor; and at least one memory having stored thereon instructions which, when executed by the at least one processor, cause the apparatus to perform at least: configuring to monitor for a low-power wake up signal (LP-WUS) and for paging on a first carrier and to respond to paging, received on the first carrier, on at least one second carrier; determining at least one threshold, the at least one threshold derived based on at least one condition, relating to channel quality of at least one of the first carrier or the at least one second carrier, for monitoring for the LP-WUS on the first carrier; and in response to receiving a LP-WUS or a paging on the first carrier, evaluating whether at least one channel measurement, of the at least one second carrier, satisfies the at least one determined threshold.

In an aspect, an indication of at least one second carrier includes at least one of: indication of at least one cell where the UE should attempt responding to the paging, indication of at least one band where the UE should attempt responding to the paging, or indication of at least one frequency where the UE should attempt responding to the paging.

In an aspect, the paging is addressing the UE when a paging message of the paging includes an identifier of the UE.

In an aspect, the identifier is S-TMSI (Temporary Mobile Subscription Identifier).

In an aspect, the identifier is I-RNTI (Inactive Radio Network Temporary Identifier).

In an aspect, the first carrier and the at least one second carrier have different frequencies.

In an aspect, the first carrier and the at least one second carrier are in different bands.

In an aspect, the first carrier is provided by a serving cell serving the UE, and the at least one second carrier is provided by at least one second cell.

In an aspect, a cell providing the first carrier and at least one cell providing the at least one second carrier are provided by different base stations.

In an aspect, a cell providing the first carrier and at least one cell providing the at least one second carrier are in different bands.

In an aspect, the at least one condition, relating to channel quality of at least one of the first carrier or the at least one second carrier, for monitoring for the LP-WUS on the first carrier, include at least one of: an entry condition which, if fulfilled, causes monitoring for a LP-WUS on the first carrier, or an exit condition which, if fulfilled, causes no monitoring for a LP-WUS on the first carrier and causes monitoring for a paging occasion on the first carrier, wherein the at least one threshold is determined based on at least one of the entry condition or the exit condition.

In an aspect, the entry condition includes an entry threshold and the exit condition includes an exit threshold, and the at least one threshold is determined based on the entry threshold and the exit threshold.

In an aspect, the at least one condition, relating to channel quality of at least one of the first carrier or the at least one second carrier, for monitoring for the LP-WUS on the first carrier, include an implementation-specific threshold, and the at least one threshold is determined based on the implementation-specific threshold.

In an aspect, the at least one condition, relating to channel quality of at least one of the first carrier or the at least one second carrier, for monitoring for the LP-WUS on the first carrier, include a configured threshold, and the at least one threshold is determined based on the configured threshold.

In an aspect, the at least one channel measurement, of the at least one second carrier, includes a measurement stored before receiving the LP-WUS or the paging on the first carrier, and the evaluating is performed based on the stored measurement.

In an aspect, the at least one channel measurement, of the at least one second carrier, includes a measurement obtained after receiving the LP-WUS or the paging on the first carrier, and the evaluating is performed based on the obtained measurement.

In an aspect, the instructions, when executed by the at least one processor, further cause the apparatus to perform at least: obtaining the measurement, using a main radio of the UE, based on at least one system synchronization block on the at least one second carrier.

In an aspect, the instructions, when executed by the at least one processor, further cause the apparatus to perform at least: based on the at least one channel measurement, of the at least one second carrier, satisfying the at least one determined threshold, initiating random access procedure on the at least one second carrier.

In an aspect, the instructions, when executed by the at least one processor, further cause the apparatus to perform at least: based on the at least one channel measurement, of the at least one second carrier, not satisfying the at least one determined threshold, initiating random access procedure on the first carrier.

In aspects, a method in a user equipment (UE) includes: configuring to monitor for a low-power wake up signal (LP-WUS) and for paging on a first carrier and to respond to paging, received on the first carrier, on at least one second carrier; determining at least one threshold, the at least one threshold derived based on at least one condition, relating to channel quality of at least one of the first carrier or the at least one second carrier, for monitoring for the LP-WUS on the first carrier; and in response to receiving a LP-WUS or a paging on the first carrier, evaluating whether at least one channel measurement, of the at least one second carrier, satisfies the at least one determined threshold.

In aspects, a non-transitory processor readable medium stores instructions which, when executed by at least one processor of an apparatus, cause the apparatus to perform at least: configuring to monitor for a low-power wake up signal (LP-WUS) and for paging on a first carrier and to respond to paging, received on the first carrier, on at least one second carrier; determining at least one threshold, the at least one threshold derived based on at least one condition, relating to channel quality of at least one of the first carrier or the at least one second carrier, for monitoring for the LP-WUS on the first carrier; and in response to receiving a LP-WUS or a paging on the first carrier, evaluating whether at least one channel measurement, of the at least one second carrier, satisfies the at least one determined threshold.

According to some aspects, there is provided the subject matter of the independent claims and of the Examples. Some further aspects are defined in the dependent claims and in the Examples.

### BRIEF DESCRIPTION OF THE DRAWINGS

Some example embodiments will now be described with reference to the accompanying drawings.
FIG. 1 is a diagram of an example embodiment of wireless networking between a network system and a user equipment (UE), according to one illustrated aspect of the disclosure;
FIG. 2 is a diagram of example components of a network system, according to one illustrated aspect of the disclosure;
FIG. 3 is a diagram of an example embodiment of a contention-based random access procedure, according to one illustrated aspect of the disclosure;
FIG. 4 is a diagram of an example embodiment of a main radio and a low-power wake-up receiver of a UE, according to one illustrated aspect of the disclosure;
FIG. 5 is a diagram of an example of operations for receiving a LP-WUS and a paging on a first carrier and for attempting to respond to the paging on a second carrier, according to one illustrated aspect of the disclosure;
FIG. 6 is a block diagram including further examples of operations for receiving a LP-WUS and a paging on a first carrier and for attempting to respond to the paging on a second carrier, according to one illustrated aspect of the disclosure;
FIG. 7 is a diagram of an example of operations for receiving a LP-WUS and a paging on a first carrier and for attempting to respond to the paging on a second carrier where conditions are fulfilled, according to one illustrated aspect of the disclosure;
FIG. 8 is a diagram including an example of operations receiving a LP-WUS and a paging on a first carrier and for attempting to respond to the paging on a second carrier where conditions are not fulfilled, according to one illustrated aspect of the disclosure;
FIG. 9 is a diagram including an example of operations for receiving a LP-WUS and a paging on a first carrier and for attempting to respond to the paging on a second carrier where the second carrier is evaluated after receiving LP-WUS or paging, according to one illustrated aspect of the disclosure; and
FIG. 10 is a diagram of an example of components of a user equipment or of a network apparatus, according to one illustrated aspect of the present disclosure.

### DETAILED DESCRIPTION

The present disclosure relates to configurations for receiving a low-power wake up signal (LP-WUS) and paging on a first carrier and for responding to the paging on a second carrier.

Wireless systems (e.g., 5G systems) are designed and developed for both mobile telephony and vertical use cases. Besides latency, reliability, and availability, user equipment (UE) energy efficiency is also important to such systems. Currently, user equipment may have to be recharged per week or day, depending on individual's usage time. In general, UEs consume tens of milliwatts in RRC idle/inactive state and hundreds of milliwatts in radio resource control (RRC) connected state. Designs to prolong battery life are important for improving energy efficiency as well as for better user experience.

Energy efficiency is even more important for UEs without a continuous energy source, e.g., UEs using small rechargeable and single coin cell batteries. Among vertical use cases, sensors and actuators can be deployed extensively for monitoring, measuring, and/or charging, etc. Generally, their batteries are not rechargeable and are expected to last at least a few years, as described in 3rd Generation Partnership Project (3GPP) Technical Report (TR) 38.875. Wearable UEs include smart watches, rings, eHealth related devices, and medical monitoring devices, among others. With typical battery capacity, it is challenging to sustain such UEs up to 1-2 weeks.

The power consumption depends in part on the configured length of wake-up periods, e.g., paging cycle. To meet the battery life requirements above, long eDRX (extended discontinuous reception) cycle may be used, resulting in high latency, which is not suitable for such services with requirements of both long battery life and low latency. For example, in fire detection and extinguishment use case, fire shutters shall be closed and fire sprinklers shall be turned on by the actuators within 1 to 2 seconds from the time the fire is detected by sensors, and long eDRX cycle cannot meet such requirements. Thus, eDRX is apparently not suitable for latency-critical use cases.

In RRC IDLE/INACTIVE modes, significant UE power saving gain (up to more than 90%) is obtained by using LP-WUS (received by a low-power wake up receiver (LP-WUR) to trigger a UE's main radio (MR) paging monitoring, compared with idle mode DRX (I-DRX) operation (with and without paging early indication (PEI)), if sufficient relaxation to MR radio resource management (RRM) measurement is applied. As used herein the term "relaxation" with respect to measurements means and refers to taking measurements less frequently than would normally occur. Further, compared with existing eDRX operation, significant paging latency reduction and moderate UE power saving gain is achieved, if LP-WUS monitoring and the corresponding paging monitoring after MR wake-up is performed not restricted within existing paging time window (PTW) of eDRX.

In RRC CONNECTED mode, moderate UE power saving gain (up to more than 10%) can be obtained with marginal impact to capacity by using LP-WUS/WUR to trigger UE MR physical downlink control channel (PDCCH) monitoring, compared with UE power saving techniques, across different types of extended reality (XR) traffic and system load scenarios. Significant UE power saving gain (up to more than 60%) and moderate user perceived throughput (UPT) improvement (up to more than 10%) is obtained for file transfer protocol (FTP) and instant messaging (IM) traffic, when the UE MR enters deep sleep state during LP-WUS monitoring. Furthermore, 3GPP Rel-18 study indicated the feasibility of serving cell RRM measurement offloading from UE MR to LP-WUR by reasonable evaluation methodology. Thus, it is proposed to specify LP-WUS/WUR in 3GPP Rel-19.

In aspects, the present disclosure enables use of a low-power wake-up receiver (LP-WUR) at the UE, instead of using the main radio (MR), in certain situations, so that UE can reduce power consumption.

In the following description, certain specific details are set forth in order to provide a thorough understanding of disclosed aspects. However, one skilled in the relevant art will recognize that aspects may be practiced without one or more of these specific details or with other methods, components, materials, etc. In other instances, well-known structures associated with transmitters, receivers, or transceivers have not been shown or described in detail to avoid unnecessarily obscuring descriptions of the aspects.

Reference throughout this specification to "one aspect" or "an aspect" means that a particular feature, structure, or characteristic described in connection with the aspect is included in at least one aspect. Thus, the appearances of the phrases "in one aspect" or "in an aspect" in various places throughout this specification are not necessarily all referring to the same aspect. Furthermore, the particular features, structures, or characteristics may be combined in any suitable manner in one or more aspects.

Embodiments described in the present disclosure may be implemented in wireless networking apparatuses, such as, without limitation, apparatuses utilizing Worldwide Interoperability for Microwave Access (WiMAX), Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, enhanced LTE (eLTE), 5G New Radio (5G NR), 5G Advance, 6G (and beyond) and 802.11ax (Wi-Fi 6), among other wireless networking systems. The term 'eLTE' here denotes the LTE evolution that connects to a 5G core. LTE is also known as evolved UMTS terrestrial radio access (EUTRA) or as evolved UMTS terrestrial radio access network (EUTRAN).

The present disclosure may use the term "serving network device" to refer to a network node or network device (or a portion thereof) that services a UE. As used herein, the terms "transmit toward," "transmit to," "receive from," and "cooperate with," (and their variations) include communications that may or may not involve communications through one or more intermediate devices or nodes. The term "acquire" (and its variations) includes acquiring in the first instance or reacquiring after the first instance. The term "connection" may mean a physical connection or a logical connection.

The present disclosure uses 5G NR as an example of a wireless network and may use smartphones and/or extended reality headsets as an example of UEs. It is intended and shall be understood that such examples are merely illustrative, and the present disclosure is applicable to other wireless networks and user equipment.

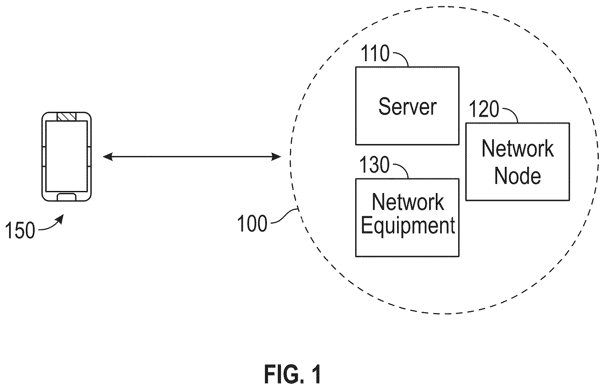

FIG. 1 is a diagram depicting an example of wireless networking between a network system 100 and a user equipment (UE) 150. The network system 100 may include one or more network nodes 120, one or more servers 110, and/or one or more network equipment 130 (e.g., test equipment). The network nodes 120 will be described in more detail below. As used herein, the term "network apparatus" may refer to any component of the network system 100, such as the server 110, the network node 120, the network equipment 130, any component(s) of the foregoing, and/or any other component(s) of the network system 100. Examples of network apparatuses include, without limitation, apparatuses implementing aspects of 5G NR, among others. The present disclosure describes embodiments related to 5G NR and embodiments that involve aspects defined by 3rd Generation Partnership Project (3GPP). However, it is contemplated that embodiments relating to other wireless networking technologies are encompassed within the scope of the present disclosure.

The following description provides further details of examples of network nodes. In a 5G NR network, a gNodeB (also known as gNB) may include, e.g., a node that provides new radio (NR) user plane and control plane protocol terminations towards the UE and that is connected via a NG interface to the 5G core (5GC), e.g., according to 3GPP TS 38.300 V16.6.0 (2021-06) section 3.2, which is hereby incorporated by reference herein.

A gNB supports various protocol layers, e.g., Layer 1 (L1) - physical layer, Layer 2 (L2), and Layer 3 (L3).

The layer 2 (L2) of NR is split into the following sublayers: Medium Access Control (MAC), Radio Link Control (RLC), Packet Data Convergence Protocol (PDCP) and Service Data Adaptation Protocol (SDAP), where, e.g.:
o The physical layer offers to the MAC sublayer transport channels;
o The MAC sublayer offers to the RLC sublayer logical channels;
o The RLC sublayer offers to the PDCP sublayer RLC channels;
o The PDCP sublayer offers to the SDAP sublayer radio bearers;
o The SDAP sublayer offers to 5GC quality of service (QoS) flows;
o Control channels include broadcast control channel (BCCH) and physical control channel (PCCH).

Layer 3 (L3) includes, e.g., radio resource control (RRC), e.g., according to 3GPP TS 38.300 V16.6.0 (2021-06) section 6, which is hereby incorporated by reference herein.

A gNB central unit (gNB-CU) includes, e.g., a logical node hosting, e.g., radio resource control (RRC), service data adaptation protocol (SDAP), and packet data convergence protocol (PDCP) protocols of the gNB or RRC and PDCP protocols of the en-gNB, that controls the operation of one or more gNB distributed units (gNB-DUs). The gNB-CU terminates the F1 interface connected with the gNB-DU. A gNB-CU may also be referred to herein as a CU, a central unit, a centralized unit, or a control unit.

A gNB Distributed Unit (gNB-DU) includes, e.g., a logical node hosting, e.g., radio link control (RLC), media access control (MAC), and physical (PHY) layers of the gNB or en-gNB, and its operation is partly controlled by the gNB-CU. One gNB-DU supports one or multiple cells. One cell is supported by only one gNB-DU. The gNB-DU terminates the F1 interface connected with the gNB-CU. A gNB-DU may also be referred to herein as DU or a distributed unit.

A gNB-CU-Control Plane (gNB-CU-CP) includes, e.g., a logical node hosting, e.g., the RRC and the control plane part of the PDCP protocol of the gNB-CU for an en-gNB or a gNB. The gNB-CU-CP terminates the E1 interface connected with the gNB-CU-User Plane (gNB-CU-UP) and the F1-C interface connected with the gNB-DU.

A gNB-CU-User Plane (gNB-CU-UP) includes, e.g., a logical node hosting, e.g., the user plane part of the PDCP protocol of the gNB-CU for an en-gNB, and the user plane part of the PDCP protocol and the SDAP protocol of the gNB-CU for a gNB. The gNB-CU-UP terminates the E1 interface connected with the gNB-CU-CP and the F1-U interface connected with the gNB-DU, e.g., according to 3GPP TS 38.401 V16.6.0 (2021-07) section 3.1, which is hereby incorporated by reference herein.

As used herein, the term "network node" may refer to any of a gNB, a gNB-CU, a gNB-DU, a gNB-CU-CP, or a gNB-CU-UP, or any combination of them.

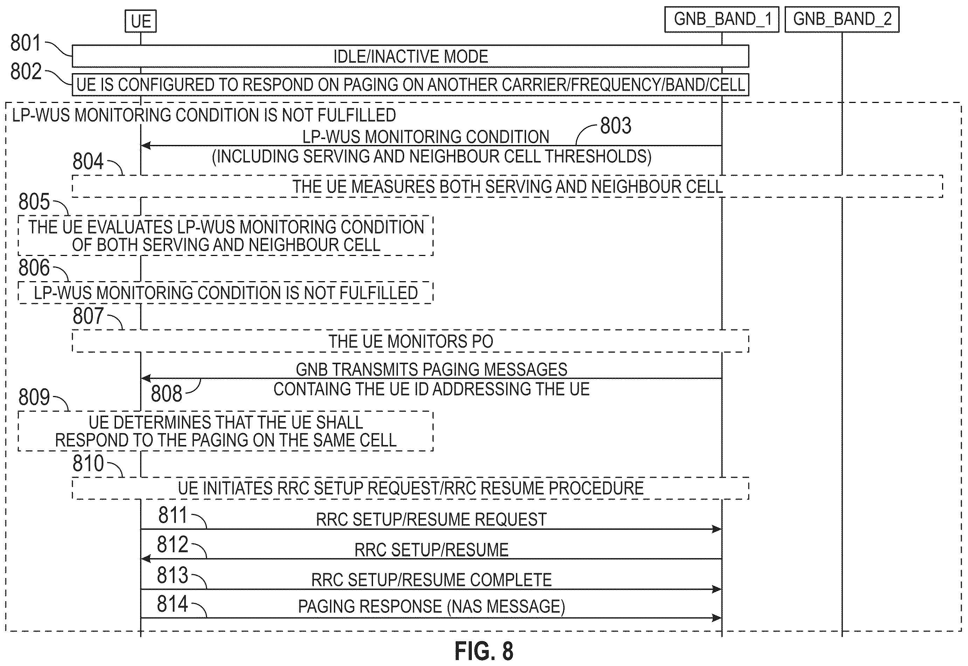

A RAN (radio access network) node or network node such as, e.g., a gNB, gNB-CU, or gNB-DU, or parts thereof, may be implemented using, e.g., an apparatus with at least one processor and/or at least one memory with processor-readable instructions ("program") configured to support and/or provision and/or process CU and/or DU related functionality and/or features, and/or at least one protocol (sub-)layer of a RAN (radio access network), e.g., layer 2 and/or layer 3. Different functional splits between the central and distributed unit are possible. An example of such an apparatus and components will be described in connection with FIG. 8 below.

The gNB-CU and gNB-DU parts may, e.g., be co-located or physically separated. The gNB-DU may even be split further, e.g., into two parts, e.g., one including processing equipment and one including an antenna. A central unit (CU) may also be called baseband unit/radio equipment controller/cloud-RAN/virtual-RAN (BBU/REC/C-RAN/V-RAN), open-RAN (O-RAN), or part thereof. A distributed unit (DU) may also be called remote radio head/remote radio unit/radio equipment/radio unit (RRH/RRU/RE/RU), or part thereof. Hereinafter, in various example embodiments of the present disclosure, a network node, which supports at least one of central unit functionality or a layer 3 protocol of a radio access network, may be, e.g., a gNB-CU. Similarly, a network node, which supports at least one of distributed unit functionality or a layer 2 protocol of the radio access network, may be, e.g., a gNB-DU.

A gNB-CU may support one or multiple gNB-DUs. A gNB-DU may support one or multiple cells and, thus, could support a serving cell for a user equipment (UE) or support a candidate cell for handover, dual connectivity, and/or carrier aggregation, among other procedures.

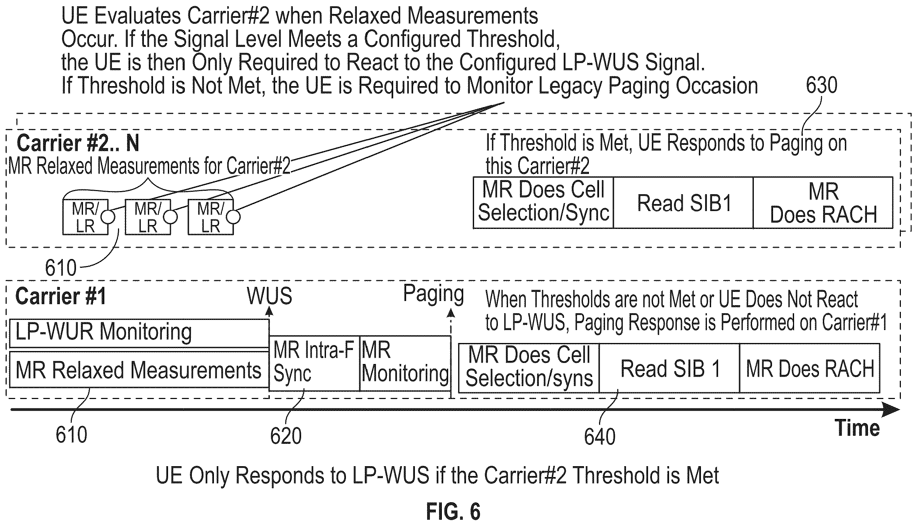

The user equipment (UE) 150 may be or include a wireless or mobile device, an apparatus with a radio interface to interact with a RAN (radio access network), a smartphone, an in-vehicle apparatus, an IoT device, or a M2M device, among other types of user equipment. Such UE 150 may include: at least one processor; and at least one memory including program code; where the at least one memory and the computer program code are configured to, with the at least one processor, cause the apparatus at least to perform certain operations, such as, e.g., RRC connection to the RAN. An example of components of a UE will be described in connection with FIG. 6. In embodiments, the UE 150 may be configured to generate a message (e.g., including a cell ID) to be transmitted via radio towards a RAN (e.g., to reach and communicate with a serving cell). In embodiments, the UE 150 may generate and transmit and receive RRC messages containing one or more RRC PDUs (packet data units). Persons skilled in the art will understand RRC protocol as well as other procedures a UE may perform.

With continuing reference to FIG. 1, in the example of a 5G NR network, the network system 100 provides one or more cells, which define a coverage area of the network system 100. As described above, the network system 100 may include a gNB of a 5G NR network or may include any other apparatus configured to control radio communication and manage radio resources within a cell. As used herein, the term "resource" may refer to radio resources, such as a resource block (RB), a physical resource block (PRB), a radio frame, a subframe, a time slot, a sub-band, a frequency region, a sub-carrier, a beam, etc. In embodiments, the network node 120 may be called a base station.

FIG. 1 provides an example and is merely illustrative of a network system 100 and a UE 150. Persons skilled in the art will understand that the network system 100 includes components not illustrated in FIG. 1 and will understand that other user equipment may be in communication with the network system 100.

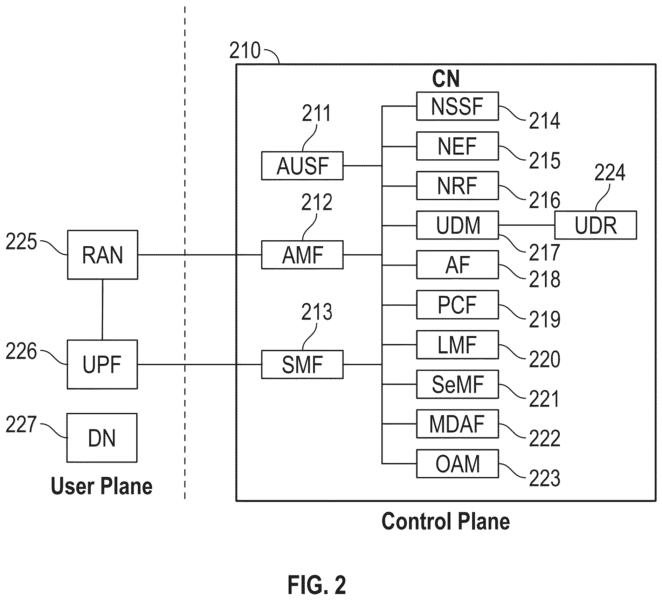

FIG. 2 is a block diagram of example components of the network system 100 of FIG. 1. A 5G NR network may be described as an example of the network system 100, and it is intended that aspects of the following description shall be applicable to other types of network systems, as well. The network system may operate in accordance with the signals and connections shown in FIG. 1 such that the UE 150 is in communication with the network system 100 through the radio access network 225. Additionally, the network system may be divided into user plane components and functions and control plane components and functions, as shown and described herein. Unless indicated otherwise, the terms "component", "function", and "service" may be used interchangeably herein, and they may refer to and be implemented by instructions executed by one or more processors.

Example functions of the components are described below. The example functions are merely illustrative, and it shall be understood that additional operations and functions may be performed by the components described herein. Additionally, the connections between components may be virtual connections over service-based interfaces such that any component may communicate with any other component. In this manner, any component may act as a service "producer," for any other component that is a service "consumer," to provide services for network functions.

For example, a core network 210 is described in the control plane of the network system. The core network 210 may include an authentication server function (AUSF) 211, an access and mobility management function (AMF) 212, and a session management function (SMF) 213. The core network 210 may also include a network slice selection function (NSSF) 214, a network exposure function (NEF) 215, a network repository function (NRF) 216, and a unified data management function (UDM) 217, which may include a uniform data repository (UDR) 224.

Additional components and functions of the core network 210 may include an application function 218, policy control function (PCF) 219, network data analytics function (NWDAF) 220, analytics data repository function (ADRF) 221, management data analytics function (MDAF) 222, and operations and management function (OAM) 223.

The user plane includes the UE 150, a radio access network (RAN) 225, a user plane function (UPF) 226, and a data network (DN) 227. The RAN 225 may include one or more components described in connection with FIG. 1, such as one or more network nodes. However, the RAN 225 may not be limited to such components. The UPF 226 provides connection for data being transmitted over the RAN 225. The DN 226 identifies services from service providers, Internet access, and third party services, for example.

The AMF 212 processes connection and mobility tasks. The AUSF 211 receives authentication requests from the AMF 212 and interacts with UDM 217 to authenticate and validate network responses for determination of successful authentication. The SMF 213 conducts packet data unit (PDU) session management, as well as manages session context with the UPF 226.

The NSSF 214 may select a network slicing instance (NSI) and determine the allowed network slice selection assistance information (NSSAI). This selection and determination is utilized to set the AMF 212 to provide service to the UE 150. The NEF 215 secures access to network services for third parties to create specialized network services. The NRF 216 acts as a repository to store network functions to allow the functions to register with and discover each other.

The UDM 217 generates authentication vectors for use by the AUSF 211 and ADM 212 and provides user identification handling. The UDM 217 may be connected to the UDR 224 which stores data associated with authentication, applications, or the like. The AF 218 provides application services to a user (e.g., streaming services, etc.). The PCF 219 provides policy control functionality. For example, the PCF 219 may assist in network slicing and mobility management, as well as provide quality of service (QoS) and charging functionality.

The NWDAF 220 collects data (e.g., from the UE 150 and the network system) to perform network analytics and provide insight to functions that utilize the analytics in the providing of services. The ADRF 221 allows the storage, retrieval, and removal of data and analytics by consumers. The MDAF 222 provides additional data analytics services for network functions. The OAM 223 provides provisioning and management processing functions to manage elements in or connected to the network (e.g., UE 150, network nodes, etc.).

FIG. 2 is merely an example of components of a network system, and variations are contemplated to be within the scope of the present disclosure. In embodiments, the network system may include other components not illustrated in FIG. 2. In embodiments, the network system may not include every component illustrated in FIG. 2. In embodiments, the components and connections may be implemented with different connections than those illustrated in FIG. 2. Such and other embodiments are contemplated to be within the scope of the present disclosure.

A procedure for a UE to establish communications with a target cell is referred to as random access procedure. Random access procedure may be used for initial access, small data transmissions in inactive and transition from RRC_Inactive to RRC_Connected, as well as in beam failure recovery, connection re-establishment, handover, and cell addition, among other procedures which persons skilled in the art will recognize.

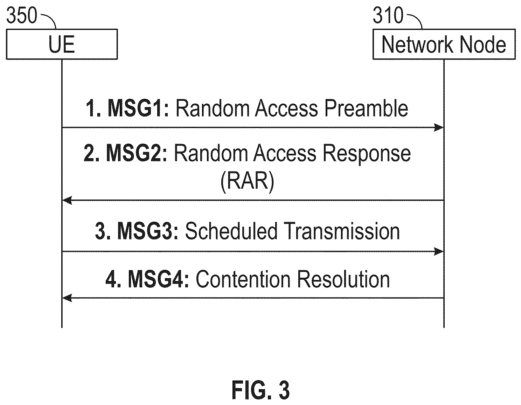

Two types of random access procedures include contention-based random access (CBRA) and contention-free random access (CFRA). FIG. 3 is a diagram of an example of a contention-based random access (CBRA) procedure. In the illustrated example, the signals include a random access preamble (MSG1) transmitted by the UE 350 towards the network node 310 (e.g., gNodeB, or part thereof), a random access response (MSG2) transmitted from the network node 310 towards the UE 350, a schedule transmission (MSG3) transmitted from the UE 350 towards the network node 310, and a contention resolution (MSG4) transmitted from the network node 310 towards the UE 350.

For MSG1, the UE 350 selects a usable random access preamble based on information elements in a signal synchronization block (SSB). The UE 350 sends the random access preamble (MSG1) towards the network node 310 using a specific time and frequency resource known as random access occasion (RO). The UE 350 also provides an identity, called random access radio network temporary identity (RA-RNTI), to the network so that the network can address it in the next step.

For MSG2, the network node 310 detects the preamble, calculates various quantities, and sends a physical uplink shared channel (PUSCH) uplink (UL) grant towards the UE 350. This is called the random access response (RAR), which is sent as MSG2 addressed to the UE 350 with the relevant RA-RNTI and indicates to the UE 350 where in frequency and when in time it can transmit MSG3 on the PUSCH.

For MSG3, in response to receiving the MSG2 from the network node 310, the UE 350 sends MSG3 using the UL grant provided in the RAR. Because the RAR provides a time resource allocation, the UE 350 sends MSG3 towards the network node 310 at a timing specified by the time resource allocation and is a scheduled transmission. This MSG3 may be called a radio resource control (RRC) connection request message.

For MSG4, the network node 310 may send MSG4 towards the UE 350 for contention resolution. Contention resolution may operate in the manner specified by 3GPP for 5G NR. After the random access procedure, assuming contention resolution is resolved favorably, the UE 350 becomes connected to the network node 310. After establishing a connection, various procedures would be handled by a gNB-CU in accordance with the CU-DU split. Other aspects of contention-based random access (CBRA) will be understood by persons skilled in the art.

Another type of random access procedure is contention-free random access (CFRA) (not shown). In CFRA (not shown), the network node 310 transmits an allocated random access preamble towards the UE 350. The UE 350 receives the allocated random access preamble and sends the random access preamble to the network node 310 in a random access request as MSG1. Then, MSG2 and MSG3 are similar to those described in connection with CBRA. No conflict resolution is needed in CFRA based on use of an allocated random access preamble. Other aspects of contention-free random access (CFRA) will be understood by persons skilled in the art.

As mentioned above, in accordance with aspects of the present disclosure, the present disclosure relates to configurations for receiving a low-power wake up signal (LP-WUS) and paging on a first carrier and for responding to the paging on a second carrier.

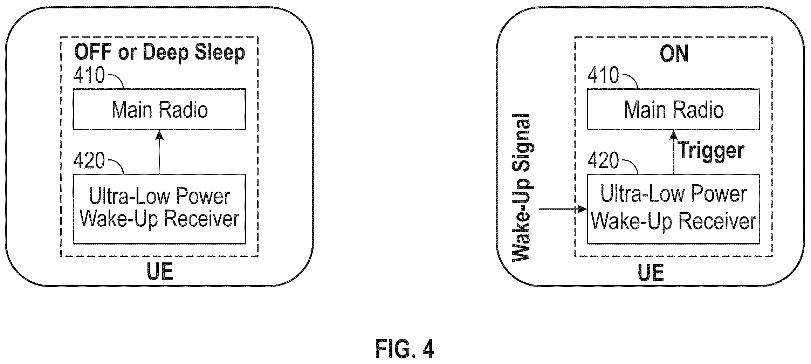

Referring now to FIG. 4, there is shown a block diagram of a UE that includes a main radio 410 and a low-power wake up receiver 420. In aspects of the present disclosure, the main radio (MR) 410 of the UE can be in a sleep mode or deep sleep mode or powered off, for power saving, and can be activated only upon the LP-WUR 420 receiving a wake-up signal from the network. The network may trigger the UE to wake-up the main radio 410, when needed, in an event-driven manner by transmitting a wake-up signal to the UE, which monitors for the LP-WUS by using the LP-WUR 420. When the UE receives the LP-WUS, the LP-WUR 420 can trigger the wake-up of the MR transceiver, and communication using the MR can start. Thus, the LP-WUR 420 wakes up the main radio 410, but otherwise, the main radio 410 may be OFF or kept in a deep sleep mode, as shown in FIG. 4.

In aspects, possible transition times for moving the MR 410 from deep sleep to ON may be in the range of 400ms - 800ms, or even longer. Hence, in some embodiments, MR ramp-up time from deep sleep state can be quite long. In embodiments, other time durations are contemplated.

In aspects, the low-power wake-up receiver can be operated in an always "on" manner with very low power consumption. In embodiments, by using a simple wake-up signal and by using specialized hardware for its monitoring, which is able to receive the WUS, the LP-WUR 420 can consume significantly less power compared to the MR 410.

Different types of LP-WUR 420 may include envelope detectors and sequence detectors. An envelope detector is capable of detecting ON/OFF keying, has no IQ branch to perform coherent/sequence detection, and can receive LP-WUS and a low-power synchronization signal (LP-SS). A sequence detector uses IQ branches to perform coherent detection, consumes more power due to the better accuracy of crystal oscillators (XO) used to drive the phase locked loops (PLL), and can receive also system synchronization blocks (SSB) in addition to LP-WUS. In embodiments, different types of LP-WUR 420 may include orthogonal frequency division multiplexing (OFDM) based LP-WUR capable of detecting and measuring PSS/SSS signal. Such and other embodiments are contemplated to be within the scope of the present disclosure.

In embodiments, the MR 410 and the LP-WUR 420 may be the same physical receiver but may be logically different. In embodiments, the LP-WUR 420 can be implemented as a separate receiver. In embodiments, the LP-WUR 420 may be implemented as a low power mode of the MR 410. For example, when the LP-WUR 420 is capable of detecting and measuring SSS and/or PSS/SSS, the LP-WUR 420 and the MR 410 may measure the same reference signal. Implementing LP-WUR 420 as a low power mode of the MR 410 reduces the implementation complexity and allows UE to share easily information between MR and LP-WUR, as they are implemented within the same receiver/module. This may, for example, reduce the wakeup / synchronization time of the UE and increase LP-WUR accuracy (e.g. as better components may be used).

The combination of a main radio 410 and a LP-WUR 420 may be beneficial in other ways. For example, in embodiments, serving cell evaluations could be offloaded from the MR 410 to the LP-WUR 420 to enable large power saving. The LP-WUR 420 can carry the serving cell evaluation related measurements based on a low-power synchronization signal (LP-SS) or based on SSB, depending on the type of LP-WUR, as described above. In embodiments, only serving cell evaluations are offloaded to the LP-WUR 420, as the coverage of the LP-SS and the LP-SUR 420 are limited.

FIG. 4 and the description above provide merely an example, and variations are contemplated to be within the scope of the present disclosure.

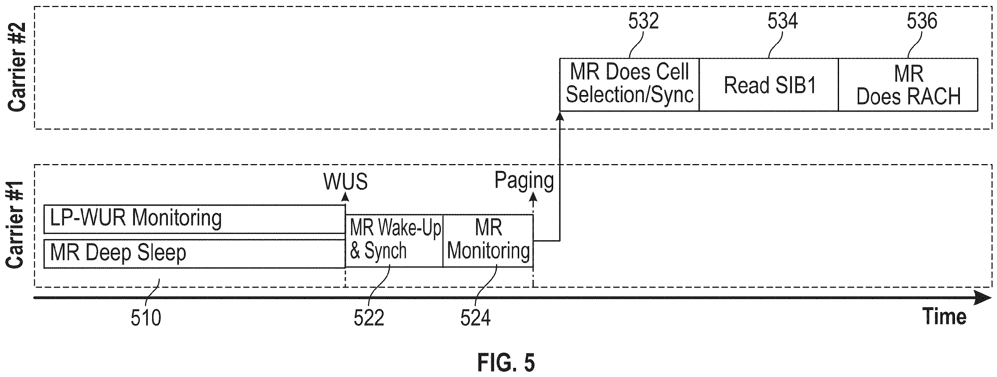

FIG. 5 shows an example of operations for receiving a LP-WUS and a paging on a first carrier and for attempting to respond to the paging on a second carrier.

The diagram assumes that the UE has a main radio and a LP-WUR, as shown in FIG. 4, and is configured to monitor for a LP-WUS and a paging on a first carrier and configured to attempt to respond to the paging on a second carrier. In embodiments, the first carrier and the second carrier have different frequencies. In embodiments, the first carrier and the second carrier may be in different bands. In embodiments, the first carrier may be provided by a serving cell serving the UE, and the second carrier may be provided a second cell different from the serving cell. In embodiments, the cell providing the first carrier and the cell providing the second carrier are provided by different base stations. In embodiments, the cell providing the first carrier and the cell providing the second carrier are in different bands.

In a first time period 510, the MR is in deep sleep, and the LP-WUR monitors for a LP-WUS and detects a LP-WUS. After the LP-WUR detects a LP-WUS, the LP-WUR triggers the MR to wake up, e.g., as shown in FIG. 4. At time period 522, the MR turns on and performs synchronization for the first carrier. Then, at time period 524, the MR monitors for a paging which is addressed to the UE, on the first carrier, and detects a paging. In embodiments, the network initiates the paging procedure by transmitting a paging message at the UE's paging occasion (PO). The network may address multiple UEs within a paging message by including one PagingRecord for each UE of the multiple UEs.

After the MR detects a paging addressed to the UE on the first carrier, the UE, as configured, attempts to respond to the paging, received on the first carrier, on the second carrier. At time period 532, the UE, using the main radio, performs cell (re)selection and synchronization on the second carrier. At time period 534, the UE, using the main radio, receives system information block 1 (SIB1), on the second carrier. At time period 536, the UE, using the main radio, performs random access procedure on the second carrier, e.g., transmits a random access preamble. There is a possibility that the random access procedure may fail, for example, because channel conditions for the second carrier may be poor or due to congestion, among other reasons. Such issues are addressed in the description below in connection with FIG. 6.

FIG. 5 and the description above are merely examples, and variations are contemplated to be within the scope of the present disclosure.

With regard to the operation of FIG. 5, a potential issue is that the coverage of the first carrier and the coverage of the second carrier may be different, and there may be delay after paging since the UE needs to select the second carrier for responding to the paging.

Additional issues may result from the UE not being knowledgeable about the second carrier's conditions, e.g., if the UE is not measuring the second carrier. For example, the radio condition of the (last used) cell in second carrier may not be good enough anymore for providing access due to, for example, coverage layer differences between the two frequency layers, which may prevent the UE from transmitting on the second carrier, e.g., due to radio conditions of the second carrier. Hence, the transmission of the paging response is not possible or transmission of the paging response may fail or RRC connection establishment or RRC resume fails. Other issues exist, as well.

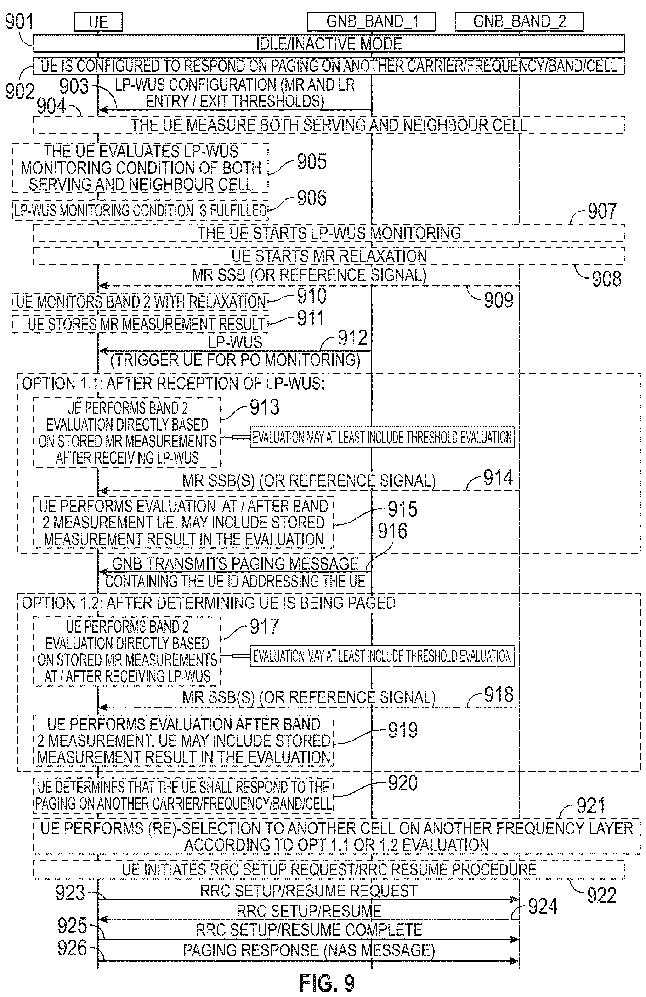

Various solutions are described below in connection with FIGS. 6-9. FIGS. 6-8 relate to conditions for monitoring for LP-WUS and paging. As described in more detail below, the conditions relate to the first carrier and/or the second carrier, e.g., relate to channel quality of the first carrier and/or the second carrier. FIG. 9 relates to operations for receiving a LP-WUS and a paging on a first carrier and for attempting to respond to the paging on a second carrier where the second carrier is evaluated after receiving LP-WUS or paging.

FIG. 6 shows an example of further operations for receiving a LP-WUS and a paging on a first carrier and for attempting to respond to the paging on a second carrier. FIG. 6 also assumes that the UE has a main radio and a LP-WUR, as shown in FIG. 4, and is configured to monitor for a LP-WUS and a paging on a first carrier and configured to attempt to respond to the paging on a second carrier.

In aspects of the present disclosure, the UE can be configured with a list of carriers, which may be denoted as carriers #2 . . . N. The UE may be configured to respond to paging, received on the first carrier, on a carrier among the carriers #2 . . . N. The list of carriers may be provided by the network. In embodiments, the UE may receive (and the network may transmit) the list of carriers in a dedicated signal, such as in a RRC release message received by the UE while the UE is in RRC-connected mode. In embodiments, the UE may receive (and the network may transmit) the list of carriers in a broadcast signal, such as in a system information block (SIB).

In aspects, the UE may perform measurements for the carriers in the list of carriers and may evaluate conditions relating to the carriers or cells on the carriers, e.g., comparing measurements to a threshold. For example, the UE may evaluate whether reference signal received power (RSRP) and/or reference signal received quality (RSRQ) of the cell on the carrier satisfy a threshold. In embodiments, the measurements may be performed by the main radio of the UE. In embodiments, the measurements may be performed by the LP-WUR of the UE. Such and other embodiments are contemplated to be within the scope of the present disclosure.

In aspects, the measurements and condition evaluations may be performed in the time period 610. In the time period 610, the MR is in deep sleep, and the LP-WUR monitors for a LP-WUS.

In accordance with aspects of the present disclosure, during the time period 610, when the MR is in deep sleep mode, the MR can wake up now and then to take measurements of the carriers #2 . . . N, and then return to deep sleep. The measurements during time period 610 are relaxed measurements in the sense that they are less frequent than the frequency at which measurements would normally occur. As an example, in comparison to the normal frequency of measurements, the relaxed measurements may take every 5^{th} measurement, or every 8^{th} measurement, or another frequency of measurements that is less than what would normally occur.

In aspects, during the time period 610, the UE evaluate conditions relating to the carriers #2 . . . N, e.g., comparing measurements to a threshold. If the conditions are fulfilled for a carrier among carriers #2 . . . N, this implies that the channel quality of such carrier may be sufficient for responding to paging on such carrier. If the conditions are not fulfilled for a carrier among carriers #2 .. . N, this implies that the channel quality of such carrier may not be sufficient for responding to paging on such carrier.

In embodiments, during the time period 620, after the LP-WUR detects a LP-WUS, the LP-WUR may trigger the MR to wake up or may not trigger the MR to wake up, depending on the condition evaluation. For example, if no evaluation conditions are fulfilled for any carrier in carriers #2 . . . N, then the LP-WUR may not trigger the MR to wake up. However, if evaluation conditions are fulfilled for a carrier in carriers #2 . . . N, then the LP-WUR may trigger the MR to wake up, so that the UE may respond to paging on such carrier.

Assuming the evaluation condition is fulfilled for at least one carrier among carriers #2 . . . N, then during time period 620, the MR turns on and performs synchronization for the first carrier. Then, the MR monitors for a paging which is addressed to the UE, on the first carrier, and detects a paging.

With continuing reference to FIG. 6, after the MR detects a paging addressed to the UE on the first carrier, the UE, as configured, attempts to respond to the paging, received on the first carrier, on one of the carriers from the list of carriers which has fulfilled evaluation conditions. As a result of the MR measurements in the time period 610, the UE may select one of the carriers, which passed condition evaluation, to use for responding to the paging.

If a carrier has passed condition evaluation, then during time period 630, the UE, using the main radio, performs cell selection and synchronization on a selected carrier, receives system information block 1 (SIB1) on the selected carrier, and performs random access procedure on the selected carrier, e.g., transmits a random access preamble.

If no carrier has passed condition evaluation, then during time period 640, the UE, using the main radio, performs cell selection and synchronization on a first carrier, receives system information block 1 (SIB1) on the first carrier, and performs random access procedure on the first carrier, e.g., transmits a random access preamble.

Various embodiments will now be described.

In embodiments, the conditions may relate to the first carrier and/or carriers #2 . . . N. In embodiments, the conditions may include an entry condition which, if fulfilled, causes monitoring for a LP-WUS on the first carrier. In embodiments, the conditions may include an exit condition which, if fulfilled, causes no monitoring for a LP-WUS on the first carrier and causes monitoring for a paging occasion on the first carrier.

In embodiments, the measurements may be based on reference signal received power (RSRP) and/or reference signal received quality (RSRQ).

In embodiments, an entry condition may include a condition that RSRP and/or RSRQ is above a minimum threshold.

In embodiments, an exit condition may include a condition that RSRP and/or RSRP is below a minimum threshold.

In embodiments, if an exit condition is fulfilled, and the UE receives a paging on the first carrier, the UE may then respond to the paging on the first carrier.

In embodiments, if the conditions are fulfilled, the UE may commence monitoring for a LP-WUS on the first carrier.

In embodiments, if the conditions relating to the carriers #2 . . . N are not fulfilled, the UE may not monitor for LP-WUS on the first carrier and may, instead, monitor for a paging on the first carrier.

In embodiments, all of the carriers among carriers #2 . . . N may be evaluated using the same evaluation conditions.

In embodiments, some or each of the carriers among carriers #2 . . . N may be evaluated using different evaluation conditions.

In embodiments, the UE may receive (and the network may transmit) the evaluation conditions in a dedicated signal, such as in a RRC release message received by the UE while the UE is in RRC-connected mode.

In embodiments, the UE may receive (and the network may transmit) the evaluation conditions in a broadcast signal, such as in a system information block (SIB).

In embodiments, the measurements may be based on primary synchronization signal (PSS), secondary synchronization signal (SSS), and/or low-power synchronization signal (LP-SS).

FIG. 6 and the description above are merely examples, and variations are contemplated to be within the scope of the present disclosure.

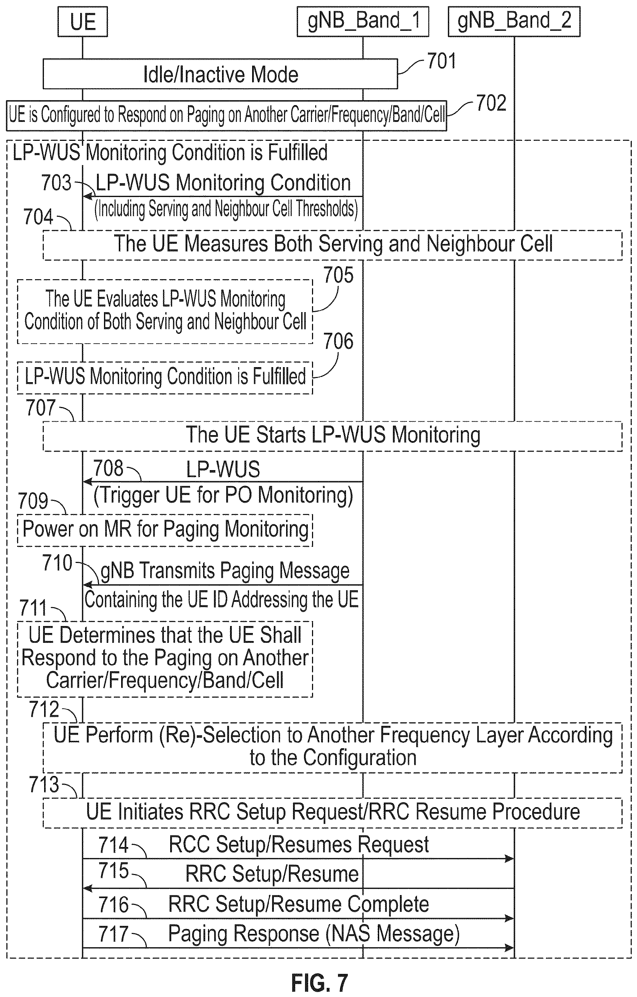

FIG. 7 is a flow diagram of an example of operations for receiving a LP-WUS and a paging on a first carrier and for attempting to respond to the paging on a second carrier where conditions are fulfilled. The operations are performed by the components shown at the top of FIG. 7, which, in the illustrated example, include a user equipment (UE), a RAN node (e.g., gNB) operating in band 1, and the RAN node (e.g., gNB) operating in band 2. Such components may be, for example, the same components described in connection with FIG. 1 and FIG. 2 or otherwise described above. The components are merely examples, and there may be two different RAN nodes (e.g., gNB and gNB2) instead of only a single RAN node (e.g. gNB).

FIG. 7 assumes that the UE has a main radio and a LP-WUR, as shown in FIG. 4.

At operation 701, the UE is in RRC-idle mode or RRC-inactive mode and is served by the RAN node (e.g., gNB) using band 1.

At operation 702, the UE is configured to monitor for a LP-WUS and for a paging on a first carrier and to respond to a paging, received on the first carrier, on a second carrier, e.g., in band 2 of the RAN node.

Operations 703-717 relate to a scenario where evaluation conditions are fulfilled.

At operation 703, the RAN node transmits LP-WUS monitoring conditions to the UE, and the UE receives the LP-WUS monitoring conditions from the RAN node. In embodiments, the conditions may include conditions relating to the first carrier (e.g., for the serving cell) and conditions relating to one or more other carriers which could be the second carrier (e.g., one or more carriers of neighbor cell(s)).

At operation 704, the UE takes measurements of the first carrier (e.g., for the serving cell) and measurements of the one or more other carriers which could be the second carrier (e.g., one or more carriers of neighbor cell(s)).

At operation 705, the UE evaluates the LP-WUS monitoring conditions (received in operation 703) based on the measurements obtained in operation 704.

At operation 706, the UE determines that the LP-WUS monitoring condition is fulfilled with respect to at least one carrier among the one or more other carriers, such that the UE can attempt to respond to paging on such a carrier.

At operation 707, the UE starts monitoring for LP-WUS.

At operation 708, the RAN node transmits a LP-WUS to the UE, and the UE receives the LP-WUS from the RAN node. In embodiments, as described in connection with FIG. 4, the LP-WUS is received by the LP-WUR.

At operation 709, the LP-WUS triggers the MR of the UE to wake up and to monitor for paging on the first carrier.

At operation 710, the RAN node transmits to the UE a paging addressing the UE, and the UE receives the paging from the RAN node. In embodiments, the paging addresses the UE by a paging message including a UE identifier that addresses the UE. In embodiments, the UE identifier may be a temporary mobile subscription identifier (S-TMSI). In embodiments, the UE identifier may be an inactive radio network temporary identifier (I-RNTI).

At operation 711, the UE determines to respond to the paging, received on the first carrier, on the second carrier, which the UE determined fulfilled evaluation conditions in operation 706.

At operation 712, the UE evaluates cell selection or cell reselection conditions for the second carrier. In the illustrated embodiment, the UE evaluates the conditions for the second carrier of the RAN node (in band 2). The UE determines that cell selection or reselection conditions for the second carrier (e.g., gNB, band 2) are satisfied.

At operation 713, the UE initiates attempting to respond to the paging, received on the first carrier, on the second carrier (e.g., gNB, band 2). In the illustrated embodiment, the UE initiates RRC Setup Request or RRC Resume procedure.

At operation 714, the UE transmits an RRC Setup or Resume Request message to the RAN node on the second carrier (e.g., gNB, band 2), and the RAN node receives the message from the UE.

At operation 715, the RAN node transmits a RRC Setup or Resume message to the UE, and the UE receives the RRC Setup or Resume message from the RAN node.

At operation 716, the UE transmits an RRC Setup or Resume Complete message to the RAN node (e.g., gNB, band 2), and the RAN node receives the message from the UE.

At operation 717, the UE transmits an paging response (e.g., non-access-stratum (NAS) message) to the RAN node (e.g., gNB2, band 2), and the RAN node receives the paging response from the UE.

Various embodiments described in connection with FIG. 6 are applicable to FIG. 7 and are incorporated by reference into this section as thought applied to the operations of FIG. 7.

The operations of FIG. 7 will now be described from various perspectives.

From the perspective of a UE, the operations include: receiving, from a radio access network (RAN) node: at least one first condition, relating to a first carrier, for monitoring for a low-power wake-up signal (LP-WUS) on the first carrier, and at least one second condition, relating to at least one second carrier, for monitoring for a LP-WUS on the first carrier (e.g., operation 703), wherein the UE is configured to monitor for a paging occasion on the first carrier and is configured to attempt responding to a paging, received on the first carrier, on one of the at least one second carrier; and determining based on the at least one first condition and the at least one second condition whether to monitor for a LP-WUS or to monitor for a paging (e.g., operation 711 and operation 809 of FIG. 8).

From the perspective of a RAN node, the operations include: transmitting at least one first condition, relating to a first carrier, for a user equipment (UE) to monitor for a low-power wake-up signal (LP-WUS) on the first carrier (e.g., operation 703); and transmitting at least one second condition, relating to at least one second carrier, for the UE to monitor for a LP-WUS on the first carrier, wherein the UE is configured to monitor for a paging occasion on the first carrier and is configured to respond to a paging occasion, received on the first carrier, on one of the at least one second carrier (e.g., operation 703).

FIG. 7 and the description above are merely examples, and variations are contemplated to be within the scope of the present disclosure.

FIG. 8 is a flow diagram of an example of operations receiving a LP-WUS and a paging on a first carrier and for attempting to respond to the paging on a second carrier where conditions are not fulfilled. The operations are performed by the components shown at the top of FIG. 8, which, in the illustrated example, include a user equipment (UE), a RAN node (e.g., gNB) operating in band 1, and the RAN node (e.g., gNB) operating in band 2. Such components may be, for example, the same components described in connection with FIG. 1 and FIG. 2 or otherwise described above. The components are merely examples, and there may be two different RAN nodes (e.g., gNB and gNB2) instead of only a single RAN node (e.g. gNB).

FIG. 8 also assumes that the UE has a main radio and a LP-WUR, as shown in FIG. 4.

At operation 801, the UE is in RRC-idle mode or RRC-inactive mode and is served by the RAN node (e.g., gNB) using band 1.

After operation 802, the UE is configured to monitor for a LP-WUS and for a paging on a first carrier and to respond to a paging, received on the first carrier, on a second carrier, e.g., in band 2 of the RAN node.

Operations 803-814 relate to a scenario where evaluation conditions are not fulfilled.

At operation 803, the RAN node transmits LP-WUS monitoring conditions to the UE, and the UE receives the LP-WUS monitoring conditions from the RAN node. In embodiments, the conditions may include conditions relating to the first carrier (e.g., for the serving cell) and conditions relating to one or more other carriers which could be the second carrier (e.g., one or more carriers of neighbor cell(s)).

At operation 804, the UE takes measurements of the first carrier (e.g., for the serving cell) and measurements of the one or more other carriers which could be the second carrier (e.g., one or more carriers of neighbor cell(s)).

At operation 805, the UE evaluates the LP-WUS monitoring conditions (received in operation 803) based on the measurements obtained in operation 804.

At operation 806, the UE determines that the LP-WUS monitoring condition is not fulfilled with respect to the one or more other carriers, such that the UE should not attempt to respond to paging on the one or more other carriers.

At operation 807, the MR wakes up and the UE starts monitoring for paging on the first carrier.

At operation 808, the RAN node transmits to the UE a paging addressing the UE, and the UE receives the paging from the RAN node. In embodiments, the paging addresses the UE by a paging message including a UE identifier that addresses the UE. In embodiments, the UE identifier may be a temporary mobile subscription identifier (S-TMSI). In embodiments, the UE identifier may be an inactive radio network temporary identifier (I-RNTI).

At operation 809, the UE determines to respond to the paging, received on the first carrier, on the first carrier.

At operation 810, the UE initiates attempting to respond to the paging, received on the first carrier, on the first carrier. In the illustrated embodiment, the UE initiates RRC Setup Request or RRC Resume procedure.

At operation 811, the UE transmits an RRC Setup or Resume Request message to the RAN node on the first carrier, and the RAN node receives the message from the UE.

At operation 812, the RAN node transmits a RRC Setup or Resume message to the UE, and the UE receives the RRC Setup or Resume message from the RAN node.

At operation 813, the UE transmits an RRC Setup or Resume Complete message to the RAN node, and the RAN node receives the message from the UE.

At operation 814, the UE transmits an paging response (e.g., non-access-stratum (NAS) message) to the RAN node, and the RAN node receives the paging response from the UE.

Various embodiments described in connection with FIG. 6 are applicable to FIG. 8 and are incorporated by reference into this section as thought applied to the operations of FIG. 8.

The operations of FIG. 8 are merely examples, and variations are contemplated to be within the scope of the present disclosure. In embodiments, the operations may include others not illustrated in FIG. 8. In embodiments, the operations may be performed by different blocks than those illustrated in FIG. 8 and/or by other blocks not illustrated in FIG. 8. Such and other embodiments are contemplated to be within the scope of the present disclosure.

FIG. 9 is a diagram including an example of operations for receiving a LP-WUS and a paging on a first carrier and for attempting to respond to the paging on a second carrier where the second carrier is evaluated after receiving LP-WUS or paging. The operations are performed by the components shown at the top of FIG. 9, which, in the illustrated example, include a user equipment (UE), a RAN node (e.g., gNB) operating in band 1, and the RAN node (e.g., gNB) operating in band 2. Such components may be, for example, the same components described in connection with FIG. 1 and FIG. 2 or otherwise described above. The components are merely examples, and there may be two different RAN nodes (e.g., gNB and gNB2) instead of only a single RAN node (e.g. gNB).

FIG. 9 assumes that the UE has a main radio and a LP-WUR, as shown in FIG. 4.

At operation 901, the UE is in RRC-idle mode or RRC-inactive mode and is served by the RAN node (e.g., gNB) using band 1.

At operation 902, the UE is configured to monitor for a LP-WUS and for a paging on a first carrier and to respond to a paging, received on the first carrier, on a second carrier, e.g., in band 2 of the RAN node.

At operation 903, the RAN node transmits LP-WUS monitoring configuration to the UE, and the UE receives the LP-WUS monitoring configuration from the RAN node. In embodiments, the configuration may include conditions relating to the first carrier (e.g., for the serving cell) and conditions relating to one or more other carriers which could be the second carrier (e.g., one or more carriers of neighbor cell(s)). In embodiments, the conditions include entry conditions and exit conditions, including thresholds, as described above in connection with FIG. 6.

At operation 904, the UE takes measurements of the first carrier (e.g., for the serving cell) and measurements of the one or more other carriers which could be the second carrier (e.g., one or more carriers of neighbor cell(s)).

At operation 905, the UE evaluates the LP-WUS monitoring conditions (received in operation 703) based on the measurements obtained in operation 704.

At operation 906, the UE determines that the LP-WUS monitoring condition is fulfilled with respect to at least one carrier among the one or more other carriers, such that the UE can attempt to respond to paging on such a carrier.

At operation 907, the UE starts monitoring for LP-WUS.

At operation 908, the UE starts relaxed measurements using the main radio. As described above in connection with FIG. 6, the relaxed measurements occur at a frequency that is less than a frequency at which measurements normally occur.

At operation 909, the RAN node (e.g., gNB, band 2) transmits reference signals (e.g., synchronization signal blocks (SSB)) to the UE, and the UE receives the reference signals from the RAN node.

At operation 910, the UE monitors the one or more other carriers (e.g., gNB, band 2) with relaxation, and takes relaxed measurements of the one or more other carriers.

At operation 911, the UE stores the measurements obtained at operation 910.

At operation 912, the RAN node transmits a LP-WUS to the UE, and the UE receives the LP-WUS from the RAN node. In embodiments, as described in connection with FIG. 4, the LP-WUS is received by the LP-WUR.

Operations 913-915 below (denoted as option 1.1) relate to an embodiment where the UE evaluates the one or more other carriers after receiving the LP-WUS. Operations 917-919 below (denoted as option 1.2) relate to an embodiment where the UE evaluates the one or more other carriers after receiving the paging.

In option 1.1, the operations may include one or both of operation 913 and operation 915.

At operation 913, the UE evaluates the one or more other carriers (e.g., including gNB, band 2) based on the measurements stored at operation 911, upon or after receiving the LP-WUS.

At operation 914, the RAN node (e.g., gNB, band 2) transmits reference signals (e.g., synchronization signal blocks (SSB)) to the UE, and the UE receives the reference signals from the RAN node. The UE takes a measurement of the received reference signals.

At operation 915, the UE evaluates the one or more other carriers (e.g., including gNB, band 2) based on at least the measurements obtained at operation 914. In embodiments, the UE may evaluate the one or more other carriers based also on the measurements stored at operation 911.

At operation 916, the RAN node transmits to the UE a paging addressing the UE, and the UE receives the paging from the RAN node. In embodiments, the paging addresses the UE by a paging message including a UE identifier that addresses the UE. In embodiments, the UE identifier may be a temporary mobile subscription identifier (S-TMSI). In embodiments, the UE identifier may be an inactive radio network temporary identifier (I-RNTI).

After operation 916, if option 1.2 is not implemented, the operation proceeds to operation 920.

At operation 920, the UE determines to respond to the paging, received on the first carrier, on the second carrier, which the UE determined could be used based on the evaluation in operation 913 and/or 915.

At operation 921, the UE evaluates cell selection or cell reselection conditions for the second carrier. In the illustrated embodiment, the UE evaluates the conditions for the second carrier of the RAN node (in band 2). The UE determines that cell selection or reselection conditions for the second carrier (e.g., gNB2, band 2) are satisfied.

At operation 922, the UE initiates attempting to respond to the paging, received on the first carrier, on the second carrier (e.g., gNB2, band 2). In the illustrated embodiment, the UE initiates RRC Setup Request or RRC Resume procedure.

At operation 923, the UE transmits an RRC Setup or Resume Request message to the RAN node on the second carrier (e.g., gNB2, band 2), and the RAN node receives the message from the UE.

At operation 924, the RAN node transmits a RRC Setup or Resume message to the UE, and the UE receives the RRC Setup or Resume message from the RAN node.

At operation 925, the UE transmits an RRC Setup or Resume Complete message to the RAN node (e.g., gNB2, band 2), and the RAN node receives the message from the UE.

At operation 926, the UE transmits an paging response (e.g., non-access-stratum (NAS) message) to the RAN node (e.g., gNB2, band 2), and the RAN node receives the paging response from the UE.

After operation 916, if option 1.2 is implemented, the operation proceeds to operation 917.

In option 1.2, the operations may include one or both of operation 917 and operation 919.

At operation 917, the UE evaluates the one or more other carriers (e.g., including gNB, band 2) based on the measurements stored at operation 911, upon or after receiving the paging.

At operation 918, the RAN node (e.g., gNB, band 2) transmits reference signals (e.g., synchronization signal blocks (SSB)) to the UE, and the UE receives the reference signals from the RAN node. The UE takes a measurement of the received reference signals.

At operation 919, the UE evaluates the one or more other carriers (e.g., including gNB, band 2) based on at least the measurements obtained at operation 918. In embodiments, the UE may evaluate the one or more other carriers based also on the measurements stored at operation 911.

At operation 920, the UE determines to respond to the paging, received on the first carrier, on the second carrier, which the UE determine could be used based on the evaluation in operation 917 and/or 919.

At operation 921, the UE evaluates cell selection or cell reselection conditions for the second carrier. In the illustrated embodiment, the UE evaluates the conditions for the second carrier of the RAN node (in band 2). The UE determines that cell selection or reselection conditions for the second carrier (e.g., gNB2, band 2) are satisfied.

Operations 921-926 are the same as those described above.

Various embodiments will now be described.

In embodiments, the evaluations at operations 913, 915, 917, and 919 are not based on any explicitly defined thresholds. Rather, the UE may derive thresholds for the evaluations at operations 913, 915, 917, and 919. In embodiments, the UE may derive such thresholds based on entry thresholds and/or exit thresholds received in operation 903 (if they were included). In embodiments, the UE may derive such thresholds based on an implementation-specific threshold. In embodiments, the UE may derive such thresholds based on the LP-WUS monitoring conditions received in operation 903, which may include a configured threshold. Other possibilities are contemplated to be within the scope of the present disclosure.

In embodiments, the evaluations at operations 913, 915, 917, and 919 may be based on reference signal received power (RSRP) and/or reference signal received quality (RSRQ).

In embodiments, if the evaluations at operations 913, 915, 917, and 919 indicate that channel quality is not satisfactory, the UE may attempt responding to the paging on the first carrier.

The operations of FIG. 9 will now be described from various perspectives.

From the perspective of a UE, the operations include: configuring to monitor for a low-power wake up signal (LP-WUS) and for paging on a first carrier and to respond to paging, received on the first carrier, on at least one second carrier (e.g., operation 902); determining at least one threshold, the at least one threshold derived based on at least one condition, relating to channel quality of at least one of the first carrier or the at least one second carrier, for monitoring for the LP-WUS on the first carrier (e.g., operations 913, 915, 916, and/or 918); and in response to receiving a LP-WUS or a paging on the first carrier, evaluating whether at least one channel measurement, of the at least one second carrier, satisfies the at least one determined threshold (e.g., operations 913, 915, 916, and/or 918).

FIG. 9 and the description above are merely examples, and variations are contemplated to be within the scope of the present disclosure.

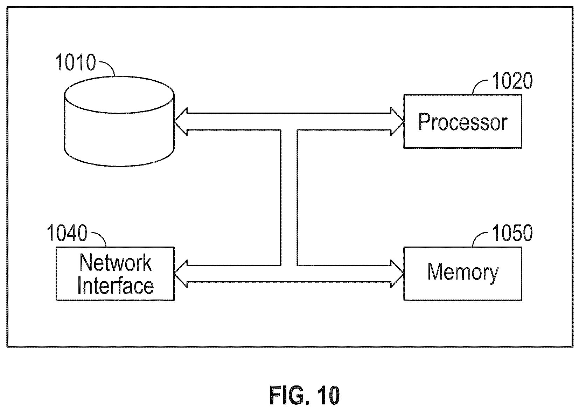

Referring now to FIG. 10, there is shown a block diagram of example components of a UE or a network apparatus. The apparatus includes an electronic storage (e.g., non-transitory processor-readable medium) 1010, a processor 1020, a memory 1050, and a network interface 1040. The various components may be communicatively coupled with each other. The processor 1020 may be and may include any type of processor, such as a single-core central processing unit (CPU), a multi-core CPU, a microprocessor, a digital signal processor (DSP), a System-on-Chip (SoC), or any other type of processor. The memory 1050 may be a volatile type of memory, e.g., RAM, or a non-volatile type of memory, e.g., NAND flash memory. The memory 1050 includes processor-readable instructions that are executable by the processor 1020 to cause the apparatus to perform various operations, including those mentioned herein, such as the operations of FIGS. 3-9.

The electronic storage 1010 may be and include any type of electronic storage used for storing data, such as hard disk drive, solid state drive, and/or optical disc, among other types of electronic storage. The electronic storage 1010 stores processor-readable instructions for causing the apparatus to perform its operations and stores data associated with such operations, such as storing data relating to 5G NR standards, among other data. The network interface 1040 may implement wireless networking technologies such as 5G NR and/or other wireless networking technologies.

The components shown in FIG. 10 are merely examples, and persons skilled in the art will understand that an apparatus includes other components not illustrated and may include multiples of any of the illustrated components. Such and other embodiments are contemplated to be within the scope of the present disclosure.

Further embodiments of the present disclosure include the following examples. In the following, any "means" may be implemented by at least one processor and processor-executable instructions, unless the context indicates otherwise. Any "means" for receiving or transmitting may be implemented by a transceiver. The notation Example n.x refers to any Example having a value for n and a value for x.

Example 1.1. A method in a user equipment (UE) comprising:
configuring to monitor for a low-power wake up signal (LP-WUS) and for paging on a first carrier and to respond to paging, received on the first carrier, on at least one second carrier;
determining at least one threshold, the at least one threshold derived based on at least one condition, relating to channel quality of at least one of the first carrier or the at least one second carrier, for monitoring for the LP-WUS on the first carrier; and
in response to receiving a LP-WUS or a paging on the first carrier, evaluating whether at least one channel measurement, of the at least one second carrier, satisfies the at least one determined threshold.

Example 1.2. The method of Example 1.1, wherein an indication of at least one second carrier comprises at least one of:
indication of at least one cell where the UE should attempt responding to the paging,
indication of at least one band where the UE should attempt responding to the paging, or
indication of at least one frequency where the UE should attempt responding to the paging.

Example 1.3. The method of Example 1.1 or Example 1.2, wherein the paging is addressing the UE when a paging message of the paging includes an identifier of the UE.

Example 1.4. The method of Example 1.3, wherein identifier is S-TMSI (Temporary Mobile Subscription Identifier).

Example 1.5. The method of Example 1.3, wherein the identifier is I-RNTI (Inactive Radio Network Temporary Identifier).

Example 1.6. The method of any one of Example 1.1- Example 1.5, wherein the first carrier and the at least one second carrier have different frequencies.

Example 1.7. The method of any one of Example 1.1- Example 1.6, wherein the first carrier and the at least one second carrier are in different bands.

Example 1.8. The method of any one of Example 1.1- Example 1.7,
wherein the first carrier is provided by a serving cell serving the UE, and
wherein the at least one second carrier is provided by at least one second cell.

Example 1.9. The method of any one of Example 1.1- Example 1.8, wherein a cell providing the first carrier and at least one cell providing the at least one second carrier are provided by different base stations.

Example 1.10. The method of any one of Example 1.1- Example 1.9, wherein a cell providing the first carrier and at least one cell providing the at least one second carrier are in different bands.

Example 1.11. The method of any one of Example 1.1- Example 1.10,
wherein the at least one condition, relating to channel quality of at least one of the first carrier or the at least one second carrier, for monitoring for the LP-WUS on the first carrier, comprise at least one of:
   an entry condition which, if fulfilled, causes monitoring for a LP-WUS on the first carrier, or
   an exit condition which, if fulfilled, causes no monitoring for a LP-WUS on the first carrier and causes monitoring for a paging occasion on the first carrier,
wherein the at least one threshold is determined based on at least one of the entry condition or the exit condition.

Example 1.12. The method of Example 1.11,
wherein the entry condition comprises an entry threshold and the exit condition comprises an exit threshold,
wherein the at least one threshold is determined based on the entry threshold and the exit threshold.

Example 1.13. The method of any one of Example 1.1- Example 1.10,
wherein the at least one condition, relating to channel quality of at least one of the first carrier or the at least one second carrier, for monitoring for the LP-WUS on the first carrier, comprises an implementation-specific threshold,
wherein the at least one threshold is determined based on the implementation-specific threshold.

Example 1.14. The method of any one of Example 1.1- Example 1.10,
wherein the at least one condition, relating to channel quality of at least one of the first carrier or the at least one second carrier, for monitoring for the LP-WUS on the first carrier, comprise a configured threshold,
wherein the at least one threshold is determined based on the configured threshold.

Example 1.15. The method of any one of Example 1.1- Example 1.14,
wherein the at least one channel measurement, of the at least one second carrier, comprises a measurement stored before receiving the LP-WUS or the paging on the first carrier,
wherein the evaluating is performed based on the stored measurement.

Example 1.16. The method of any one of Example 1.1- Example 1.15,
wherein the at least one channel measurement, of the at least one second carrier, comprises a measurement obtained after receiving the LP-WUS or the paging on the first carrier,
wherein the evaluating is performed based on the obtained measurement.

Example 1.17. The method of Example 1.16, further comprising:
obtaining the measurement, using a main radio of the UE, based on at least one system synchronization block on the at least one second carrier.

Example 1.18. The method of any one of Example 1.1- Example 1.17, further comprising:
based on the at least one channel measurement, of the at least one second carrier, satisfying the at least one determined threshold, initiating random access procedure on the at least one second carrier.

Example 1.19. The method of any one of Example 1.1- Example 1.17, further comprising:
based on the at least one channel measurement, of the at least one second carrier, not satisfying the at least one determined threshold, initiating random access procedure on the first carrier.

Example 1.20. An apparatus comprising:
at least one processor; and
at least one memory having stored thereon instructions which, when executed by the at least one processor, cause the apparatus to perform a method as in any one of Example 1.1-Example 1.19.

Example 1.21. A non-transitory processor-readable medium having stored thereon instructions which, when executed by at least one processor of an apparatus, cause the apparatus to perform a method as in any one of Example 1.1- Example 1.19.

Example 2.1. An apparatus comprising:
means for configuring to monitor for a low-power wake up signal (LP-WUS) and for paging on a first carrier and to respond to paging, received on the first carrier, on at least one second carrier;
means for determining at least one threshold, the at least one threshold derived based on at least one condition, relating to channel quality of at least one of the first carrier or the at least one second carrier, for monitoring for the LP-WUS on the first carrier; and
means for, in response to receiving a LP-WUS or a paging on the first carrier, evaluating whether at least one channel measurement, of the at least one second carrier, satisfies the at least one determined threshold.

Example 2.2. The apparatus of Example 2.1, wherein an indication of at least one second carrier comprises at least one of:
indication of at least one cell where the UE should attempt responding to the paging,
indication of at least one band where the UE should attempt responding to the paging, or
indication of at least one frequency where the UE should attempt responding to the paging.

Example 2.3. The apparatus of Example 2.1 or Example 2.2, wherein the paging is addressing the UE when a paging message of the paging includes an identifier of the UE.

Example 2.4. The apparatus of Example 2.3, wherein identifier is S-TMSI (Temporary Mobile Subscription Identifier).

Example 2.5. The apparatus of Example 2.3, wherein the identifier is I-RNTI (Inactive Radio Network Temporary Identifier).

Example 2.6. The apparatus of any one of Example 2.1- Example 2.5, wherein the first carrier and the at least one second carrier have different frequencies.

Example 2.7. The apparatus of any one of Example 2.1- Example 2.6, wherein the first carrier and the at least one second carrier are in different bands.

Example 2.8. The apparatus of any one of Example 2.1- Example 2.7,
wherein the first carrier is provided by a serving cell serving the UE, and
wherein the at least one second carrier is provided by at least one second cell.

Example 2.9. The apparatus of any one of Example 2.1- Example 2.8, wherein a cell providing the first carrier and at least one cell providing the at least one second carrier are provided by different base stations.

Example 2.10. The apparatus of any one of Example 2.1- Example 2.9, wherein a cell providing the first carrier and at least one cell providing the at least one second carrier are in different bands.

Example 2.11. The apparatus of any one of Example 2.1- Example 2.10,
wherein the at least one condition, relating to channel quality of at least one of the first carrier or the at least one second carrier, for monitoring for the LP-WUS on the first carrier, comprise at least one of:
   an entry condition which, if fulfilled, causes monitoring for a LP-WUS on the first carrier, or
   an exit condition which, if fulfilled, causes no monitoring for a LP-WUS on the first carrier and causes monitoring for a paging occasion on the first carrier,
wherein the at least one threshold is determined based on at least one of the entry condition or the exit condition.

Example 2.12. The apparatus of Example 2.11,
wherein the entry condition comprises an entry threshold and the exit condition comprises an exit threshold,
wherein the at least one threshold is determined based on the entry threshold and the exit threshold.

Example 2.13. The apparatus of any one of Example 2.1- Example 2.10,
wherein the at least one condition, relating to channel quality of at least one of the first carrier or the at least one second carrier, for monitoring for the LP-WUS on the first carrier, comprises an implementation-specific threshold,
wherein the at least one threshold is determined based on the implementation-specific threshold.

Example 2.14. The apparatus of any one of Example 2.1- Example 2.10,
wherein the at least one condition, relating to channel quality of at least one of the first carrier or the at least one second carrier, for monitoring for the LP-WUS on the first carrier, comprise a configured threshold,
wherein the at least one threshold is determined based on the configured threshold.

Example 2.15. The apparatus of any one of Example 2.1- Example 2.14,
wherein the at least one channel measurement, of the at least one second carrier, comprises a measurement stored before receiving the LP-WUS or the paging on the first carrier,
wherein the evaluating is performed based on the stored measurement.

Example 2.16. The apparatus of any one of Example 2.1- Example 2.15,
wherein the at least one channel measurement, of the at least one second carrier, comprises a measurement obtained after receiving the LP-WUS or the paging on the first carrier,
wherein the evaluating is performed based on the obtained measurement.

Example 2.17. The apparatus of Example 2.16, further comprising:
means for obtaining the measurement, using a main radio of the UE, based on at least one system synchronization block on the at least one second carrier.

Example 2.18. The apparatus of any one of Example 2.1- Example 2.17, further comprising:
means for, based on the at least one channel measurement, of the at least one second carrier, satisfying the at least one determined threshold, initiating random access procedure on the at least one second carrier.

Example 2.19. The apparatus of any one of Example 2.1- Example 2.17, further comprising:
means for, based on the at least one channel measurement, of the at least one second carrier, not satisfying the at least one determined threshold, initiating random access procedure on the first carrier.

The embodiments and aspects disclosed herein are examples of the present disclosure and may be embodied in various forms. For instance, although certain embodiments herein are described as separate embodiments, each of the embodiments herein may be combined with one or more of the other embodiments herein. Specific structural and functional details disclosed herein are not to be interpreted as limiting, but as a basis for the claims and as a representative basis for teaching one skilled in the art to variously employ the present disclosure in virtually any appropriately detailed structure. Like reference numerals may refer to similar or identical elements throughout the description of the figures.

The phrases "in an aspect," "in aspects," "in various aspects," "in some aspects," or "in other aspects" may each refer to one or more of the same or different aspects in accordance with this present disclosure. The phrase "a plurality of" may refer to two or more.

The phrases "in an embodiment," "in embodiments," "in various embodiments," "in some embodiments," or "in other embodiments" may each refer to one or more of the same or different embodiments in accordance with the present disclosure. A phrase in the form "A or B" means "(A), (B), or (A and B)." A phrase in the form "at least one of A, B, or C" means "(A); (B); (C); (A and B); (A and C); (B and C); or (A, B, and C)."

Any of the herein described methods, programs, algorithms or codes may be converted to, or expressed in, a programming language or computer program. The terms "programming language" and "computer program," as used herein, each include any language used to specify instructions to a computer, and include (but is not limited to) the following languages and their derivatives: Assembler, Basic, Batch files, BCPL, C, C+, C++, Delphi, Fortran, Java, JavaScript, machine code, operating system command languages, Pascal, Perl, PL1, Python, scripting languages, Visual Basic, metalanguages which themselves specify programs, and all first, second, third, fourth, fifth, or further generation computer languages. Also included are database and other data schemas, and any other meta-languages. No distinction is made between languages which are interpreted, compiled, or use both compiled and interpreted approaches. No distinction is made between compiled and source versions of a program. Thus, reference to a program, where the programming language could exist in more than one state (such as source, compiled, object, or linked) is a reference to any and all such states. Reference to a program may encompass the actual instructions and/or the intent of those instructions.

While aspects of the present disclosure have been shown in the drawings, it is not intended that the present disclosure be limited thereto, as it is intended that the present disclosure be as broad in scope as the art will allow and that the specification be read likewise. Therefore, the above description should not be construed as limiting, but merely as exemplifications of particular aspects. Those skilled in the art will envision other modifications within the scope and spirit of the claims appended hereto.

## Claims

1. An apparatus (150; 350) comprising:
at least one processor (1020); and
at least one memory (1050) having stored thereon instructions which, when executed by the at least one processor, cause the apparatus to perform at least:
configuring to monitor for a low-power wake up signal, LP-WUS, and for paging on a first carrier and to respond to paging, received on the first carrier, on at least one second carrier;
determining at least one threshold, the at least one threshold derived based on at least one condition, relating to channel quality of at least one of the first carrier or the at least one second carrier, for monitoring for the LP-WUS on the first carrier; and
in response to receiving a LP-WUS or a paging on the first carrier, evaluating whether at least one channel measurement, of the at least one second carrier, satisfies the at least one determined threshold.

2. The apparatus of claim 1, wherein an indication of at least one second carrier comprises at least one of:
indication of at least one cell where a user equipment, UE, should attempt responding to the paging,
indication of at least one band where the UE should attempt responding to the paging, or
indication of at least one frequency where the UE should attempt responding to the paging.

3. The apparatus of claim 1 or claim 2, wherein the paging is addressing a user equipment, UE, when a paging message of the paging includes an identifier of the UE.

4. The apparatus of claim 3, wherein identifier is Temporary Mobile Subscription Identifier, S-TMSI, or Inactive Radio Network Temporary Identifier, I-RNTI.

5. The apparatus of any one of claims 1-4, wherein at least one of the following: the first carrier and the at least one second carrier have different frequencies; and the first carrier and the at least one second carrier are in different bands.

6. The apparatus of any one of claims 1-5,
wherein the first carrier is provided by a serving cell serving a user equipment, UE, and
wherein the at least one second carrier is provided by at least one second cell.

7. The apparatus of any one of claims 1-6, wherein at least one of the following: a cell providing the first carrier and at least one cell providing the at least one second carrier are provided by different base stations; and a cell providing the first carrier and at least one cell providing the at least one second carrier are in different bands.

8. The apparatus of any one of claims 1-7,
wherein the at least one condition, relating to channel quality of at least one of the first carrier or the at least one second carrier, for monitoring for the LP-WUS on the first carrier, comprise at least one of:
an entry condition which, if fulfilled, causes monitoring for a LP-WUS on the first carrier, or
an exit condition which, if fulfilled, causes no monitoring for a LP-WUS on the first carrier and causes monitoring for a paging occasion on the first carrier,
wherein the at least one threshold is determined based on at least one of the entry condition or the exit condition.

9. The apparatus of any one of claims 1-7,
wherein the at least one condition, relating to channel quality of at least one of the first carrier or the at least one second carrier, for monitoring for the LP-WUS on the first carrier, comprise an implementation-specific threshold,
wherein the at least one threshold is determined based on the implementation-specific threshold.

10. The apparatus of any one of claims 1-7,
wherein the at least one condition, relating to channel quality of at least one of the first carrier or the at least one second carrier, for monitoring for the LP-WUS on the first carrier, comprise a configured threshold,
wherein the at least one threshold is determined based on the configured threshold.

11. The apparatus of any one of claims 1-10,
wherein the at least one channel measurement, of the at least one second carrier, comprises a measurement stored before receiving the LP-WUS or the paging on the first carrier,
wherein the evaluating is performed based on the stored measurement.

12. The apparatus of any one of claims 1-11,
wherein the at least one channel measurement, of the at least one second carrier, comprises a measurement obtained after receiving the LP-WUS or the paging on the first carrier,
wherein the evaluating is performed based on the obtained measurement.

13. The apparatus of claim 12, wherein the instructions, when executed by the at least one processor, further cause the apparatus to perform at least:
obtaining the measurement, using a main radio of a user equipment, UE, based on at least one system synchronization block on the at least one second carrier.

14. The apparatus of any one of claims 1-13, wherein the instructions, when executed by the at least one processor, further cause the apparatus to perform at least:
based on the at least one channel measurement, of the at least one second carrier, satisfying the at least one determined threshold, initiating random access procedure on the at least one second carrier; or
based on the at least one channel measurement, of the at least one second carrier, not satisfying the at least one determined threshold, initiating random access procedure on the first carrier.

15. A method in a user equipment, UE, comprising:
configuring to monitor for a low-power wake up signal, LP-WUS, and for paging on a first carrier and to respond to paging, received on the first carrier, on at least one second carrier;
determining at least one threshold, the at least one threshold derived based on at least one condition, relating to channel quality of at least one of the first carrier or the at least one second carrier, for monitoring for the LP-WUS on the first carrier; and
in response to receiving a LP-WUS or a paging on the first carrier, evaluating whether at least one channel measurement, of the at least one second carrier, satisfies the at least one determined threshold.
